# DEMANDE DE BREVET EUROPEEN

(11) **EP 0 623 488 A1**
(43) Date de publication de la demande: **09.11.1994**
(21) Numéro de dépôt: 94420134.2
(22) Date de dépôt: 29.04.1994
(51) Int. Cl.: B60P 1/64

(54) **Dispositif de stabilisation de plateforme de véhicule porteur en charge**

(30) Priorité: 06.05.1993 FR 9305792
(71) Demandeur: Boudrot, Charles, F-13003 Marseille (FR)
(72) Inventeur: Boudrot, Charles, F-13003 Marseille (FR)
(74) Mandataire: Dupuis, François

(57) **Abrégé**

Le dispositif de stabilisation de plateforme de véhicule porteur en charge, est remarquable en ce qu'il comprend, à partir du châssis porteur (2), et transversalement, au moins une traverse profilée de section creuse (4), débouchant près ou au dessus du ou des trains de roues (3) du véhicule porteur, ladite traverse recevant à ses extrémités (4.1), à coulissement intérieur réglable, deux barres de prolongement (5), horizontales, débordant vers l'extérieur, et recevant, à leurs extrémités (5.3), des bras (7) articulés, agencés pour recevoir, eux-mêmes, des roues (8) complémentaires d'appui au sol, contribuant à la stabilisation de la plateforme, tout en autorisant l'approche du véhicule tracteur près de la charge à transborder.

## Description

L'invention se rattache au secteur technique des remorques, plateformes et tous supports, susceptibles de recevoir des charges. En particulier, l'invention se rattache au secteur technique du matériel de chargement et déchargement de charges lourdes et encombrantes.

Il est bien connu d'utiliser pour assurer la stabilité de remorques, véhicules porteurs ou autres, lors d'opérations de chargement ou de déchargement, des béquilles susceptibles de venir en appui au sol. Ces béquilles sont généralement associées au châssis du véhicule, remorque ou plateforme, et présentent des patins d'appui à leur extrémité. La mise en position des béquilles s'effectue à l'aide de vérins ou équipements similaires. Dans cette situation, après positionnement des béquilles, l'ensemble est à position fixe et non modifiable, lesdites béquilles assurant en outre le support de charges.

Ce type d'équipement et d'installation est fiable et est très largement utilisé.

Le but recherché, selon l'invention, était de concevoir un nouveau dispositif qui autorise une répartition des charges complémentaires transportées par le véhicule tracteur, remorque ou plateforme support, tout en assurant un effet de stabilisation améliorée, et également permettant le déplacement du véhicule tracteur ou plateforme, remorque associée pour des ajustements en position par rapport à la charge à transborder.

Selon une première caractéristique de l'invention, le dispositif de stabilisation de plateforme de véhicule porteur en charge, est remarquable en ce qu'il comprend, à partir du châssis porteur, et transversalement, au moins une traverse profilée de section creuse, débouchant près ou au dessus du ou des trains de roues du véhicule porteur, ladite traverse recevant à ses extrémités, à coulissement intérieur réglable, deux barres de prolongement, horizontales, débordant vers l'extérieur, et recevant, à leurs extrémités, des bras articulés, agencés pour recevoir, eux-mêmes, des roues complémentaires d'appui au sol, contribuant à la stabilisation de la plateforme, tout en autorisant l'approche du véhicule tracteur près de la charge à transborder.

Ces caractéristiques et d'autres encore ressortiront bien de la suite de la description.

Pour fixer l'objet de l'invention, illustré d'une manière non limitative aux figures des dessins où :

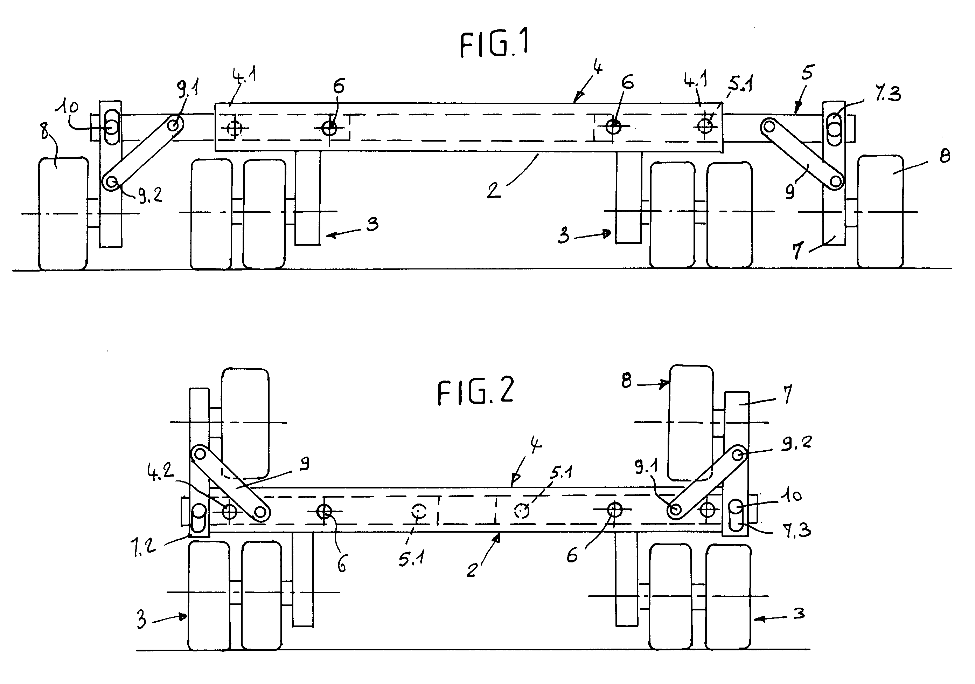

- la figure 1 est une vue, illustrant de face, une plateforme d'un véhicule tracteur recevant latéralement le dispositif, selon l'invention, ce dernier étant représenté dans sa position fonctionnement,
- la figure 2 est une vue similaire à la figure 1, le dispositif étant en position relevée,

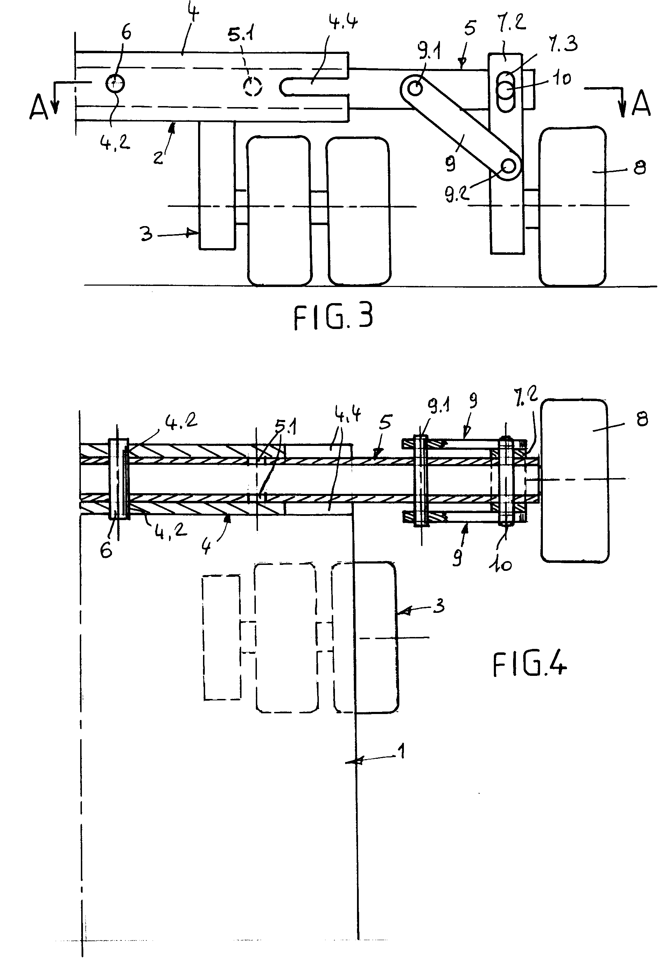

- la figure 3 est une vue à grande échelle partielle du dispositif, selon l'invention,
- la figure 4 est une vue à caractère schématique en plan selon la ligne A.A. de la figure 3,
- la figure 5 est une vue éclatée à caractère schématique d'une autre variante de réalisation,
- les figures 6 et 7 sont des vues complémentaires à la figure 5 illustrant le positionnement du dispositif en situation de fonctionnement et en situation relevée.

Afin de rendre plus concret l'objet de l'invention, on le décrit maintenant d'une manière non limitative illustré aux figures des dessins.

On a référencé par (1), d'une manière schématique, une plateforme d'un véhicule tracteur, cette plateforme pouvant être de toutes caractéristiques et dispositions connues. Cette plateforme comprend un châssis porteur (2) auquel sont associés, de manière connue, par essieux, des trains de roues (3) du véhicule.

Selon l'invention, en cas de charges, la stabilité du véhicule porteur est complétée par l'utilisation de moyens complémentaires constitués par le dispositif selon l'invention.

Plus particulièrement, transversalement au châssis du véhicule porteur, ce dernier comprend au moins une traverse profilée de section creuse (4) débouchant près ou au dessus des trains de roues (3) classiques du véhicule porteur. A chacune de ses extrémités (4.1), la traverse reçoit deux barres de prolongement (5) horizontales, de profil complémentaire, pouvant coulisser intérieurement, d'une manière contrôlée et guidée, avec un axe de verrouillage (6), traversant des ouvertures appropriées (4.2 - 5.1) formées sur la traverse et sur les barres, en des positions appropriées. Lesdites barres de prolongement, débouchant de la traverse, reçoivent à leurs extrémités des bras (7) articulés, susceptibles de recevoir eux-mêmes des roues (8) d'appui au sol. Ces bras (7) sont articulés par rapport aux barres transversales à l'aide de biellettes (9) fixées par leurs extrémités (9.1 - 9.2) à chaque barre transversale et à chaque bras, en des points (4.3 - 7.1). L'extrémité des bras forme chape (7.2) pour permettre la liaison et le pivotement avec les barres de prolongement par un axe de liaison et d'articulation (10). Lesdits bras présentent avantageusement une lumière oblongue (7.3) verticale, permettant le passage de l'axe (10), en constituant également un plan de verrouillage de l'axe en position. La traverse présente, à ses extrémités et sur ses côtés latéraux, une lumière oblongue (4.4) débouchante, permettant le passage de l'axe de liaison entre les biellettes et les barres de prolongement en position rentrée de l'ensemble. De préférence, ladite lumière oblongue (4.4) est située dans un plan médian par rapport à la lumière oblongue formée sur le bras support de roues, de telle sorte qu'il soit nécessaire de relever ledit bras pour permettre le dégagement de la roue. Le relevage des bras s'effectue par pivotement par rapport à l'axe, chaque biellette prenant une position alors relevée à 90° par rapport à la position initiale d'utilisation.

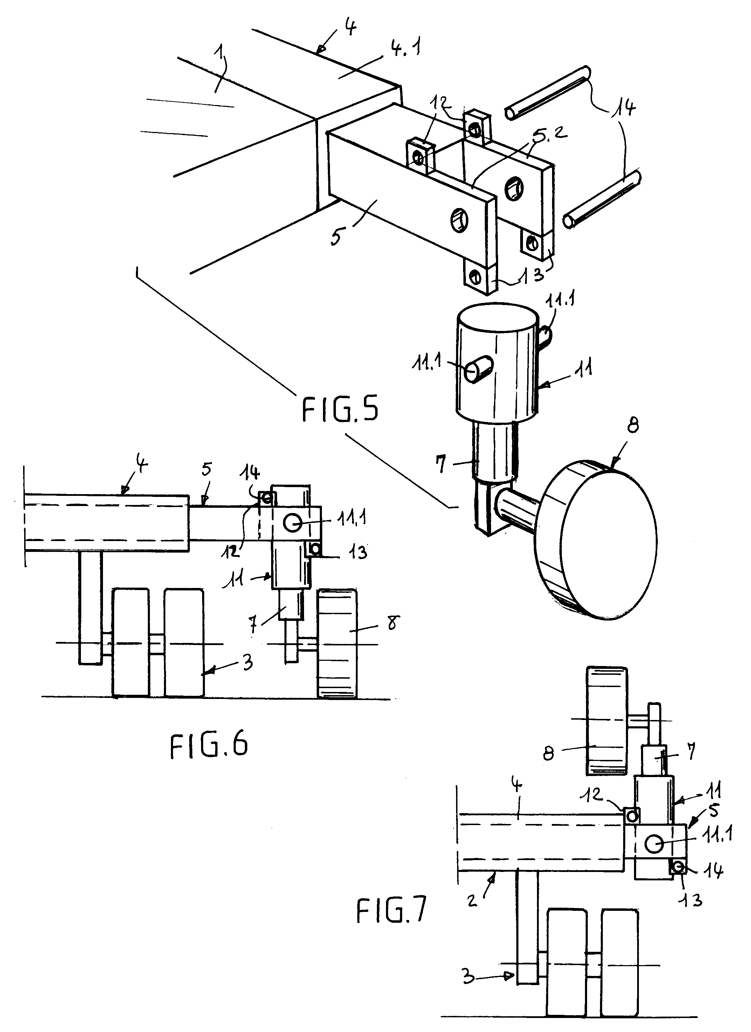

On a illustré aux figures 5, 6 et 7 une variante de mise en oeuvre dans laquelle la biellette est remplacée par un corps (11) basculant, monté à articulation entre les extémités en forme de chape des barres en prolongement. Ledit corps est de forme par exemple cylindrique et déborde de part et d'autre de la chape précitée. Il reçoit latéralement des axes pivots (11.1) pénétrant dans des ouvertures formées sur les ailes (5.2) de la chape. Ledit corps se prolonge dans sa partie inférieure avec un bras (7) recevant, dans sa partie basse, les roues complémentaires (8) du type précité. Pour assurer un verrouillage en position du corps, soit en position abaissée, soit en position relevée, il est prévu, de part et d'autre des plans supérieur et inférieur de la chape, des couples de pattes (12 - 13) montés en opposition, disposés de part et d'autre du corps et assurant un blocage et verrouillage en position de ce dernier. Des goupilles ou axes de verrouillage (14) sont disposés entre les pattes, et constituent des butées d'appui dudit corps.

Le relevage du bras, associé à la roue (8), s'effectue après enlèvement des goupilles (14), par une action manuelle ou à l'aide d'un moyen mécanique ou équivalent. Dans une mise en oeuvre, le corps (11) et le bras (7) peuvent constituer un vérin, avec tige associée à la roue.

En situation, ainsi qu'il apparaît aux dessins de chargement ou de déchargement représenté aux dessins, les roues (8) sont en appui au sol et les bras (7) sont orientés vers le bas, les barres transversales étant développées. En position route du véhicule porteur, les roues (8) sont relevées et situées dans un plan au dessus du train de roues (3) par suite du relevage des bras (7) précités, et repliement des barres transversales à l'intérieur de la traverse. Cet aménagement et cette disposition sont importants car ils permettent d'obtenir, d'une part une fonction de stabilité complémentaire, et d'autre part un roulement du véhicule porteur pour affiner le positionnement de celui-ci autour de la charge à transborder. Le déport et l'appui des roues (8) au sol augmentent le polygone de sustentation, en permettant une meilleure répartition des charges. Il peut être envisagé de disposer, à l'avant et à l'arrière de la plateforme du véhicule porteur, ou équivalent, deux ensembles identiques.

Les avantages ressortent bien de l'invention, et en particulier on souligne la simplicité du dispositif. Celui-ci peut s'adapter sur toutes structures existantes de chargement.

## Revendications

**- 1 -** Dispositif de stabilisation de plateforme de véhicule porteur en charge, caractérisé en ce qu'il comprend, à partir du châssis porteur (2), et transversalement, au moins une traverse profilée de section creuse (4), débouchant près ou au dessus du ou des trains de roues (3) du véhicule porteur, ladite traverse recevant à ses extrémités (4.1), à coulissement intérieur réglable, deux barres de prolongement (5), horizontales, débordant vers l'extérieur, et recevant, à leurs extrémités (5.3), des bras (7) articulés, agencés pour recevoir, eux-mêmes, des roues (8) complémentaires d'appui au sol, contribuant à la stabilisation de la plateforme, tout en autorisant l'approche du véhicule tracteur près de la charge à transborder.

**- 2 -** Dispositif , selon la revendication 1, caractérisé en ce que chaque traverse et chaque barre de prolongement présente des ouvertures (4.2 - 5.2) pour autoriser l'engagement d'axes de verrouillage (6).

**- 3 -** Dispositif, selon la revendication 1, caractérisé en ce que les extrémités des barres de prolongement forment chape (5.3) pour autoriser la liaison et le pivotement des bras supports de roues, par un axe de liaison et d'articulation (10).

**- 4 -** Dispositif, selon la revendication 3, caractérisé en ce que les bras (7) sont articulés par rapport aux barres transversales à l'aide de biellettes (9) fixées par leurs extrémités (9.1 - 9.2) en des points (4.3 - 5.2), lesdits bras présentant une lumière oblongue verticale (7.1) autorisant le passage de l'axe d'articulation (10) en constituant un plan de verrouillage de celui-ci.

**- 5 -** Dispositif, selon la revendication 4, caractérisé en ce que la traverse présente à ses extrémités, et sur ses côtés latéraux, une lumière oblongue (4.4) débouchante permettant le passage de l'axe de liaison entre les biellettes et les barres de prolongement en position rentrée, ladite lumière oblongue (4.4) étant dans un plan médian par rapport à la lumière oblongue verticale (7.1).

**- 6 -** Dispositif, selon la revendication 3, caractérisé en ce que chaque bras (7) est associé à un corps (11) basculant monté à articulation entre les extrémités des barres de prolongement, et en ce que des couples de pattes (12 - 13) sont montés en opposition sur les plans supérieur et inférieur de la chape, de part et d'autre du corps en assurant, par des axes de verrouillage (14) disposés entre les pattes, des butées d'appui du corps.

**- 7 -** Dispositif, selon l'une quelconque des revendications 5 et 6, caractérisé en ce que le relevage des bras est effectué manuellement ou à l'aide de vérins.

**- 8 -** Dispositif, selon la revendication 6, caractérisé en ce que le corps (11) et le bras (7) associés constituent un vérin avec tige associée à la roue.
